(19) Europäisches Patentamt
European Patent Office
Office européen des brevets

(11) **EP 3 783 045 A1**

(12) **EUROPÄISCHE PATENTANMELDUNG**

(43) Veröffentlichungstag:
    24.02.2021  Patentblatt 2021/08

(21) Anmeldenummer: **19192407.5**

(22) Anmeldetag: **19.08.2019**

(51) Int Cl.:
    *C08G 64/30* (2006.01)      *C08G 18/42* (2006.01)
    *C08G 65/26* (2006.01)

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**
    Benannte Validierungsstaaten:
    **KH MA MD TN**

(71) Anmelder: **Covestro Deutschland AG
    51373 Leverkusen (DE)**

(72) Erfinder: **Die Erfindernennung liegt noch nicht vor**

(74) Vertreter: **Levpat
    c/o Covestro AG
    Gebäude 4825
    51365 Leverkusen (DE)**

(54) **VERFAHREN ZUR HERSTELLUNG VON POLYETHERCARBONATPOLYOLEN**

(57)     Gegenstand der Erfindung ist ein Verfahren zur Herstellung von Polyethercarbonatpolyolen durch Anlagerung cyclischen Carbonats an eine H-funktionelle Startersubstanz in Anwesenheit eines Katalysators, dadurch gekennzeichnet, dass als Katalysator ein tribasisches Alkali- oder Erdalkalimetallphosphat eingesetzt wird.

EP 3 783 045 A1

**Beschreibung**

Die vorliegende Erfindung betrifft ein Verfahren zur Herstellung von Polyethercarbonatpolyolen durch katalytische Anlagerung cyclischer Carbonate an eine H-funktionelle Startersubstanz.

Es ist bekannt, dass cyclische Carbonate, wie z.B. cyclisches Ethylencarbonat oder Propylencarbonat, als Monomer in der Herstellung von Polyethercarbonatpolyolen eingesetzt werden können. Für diese Umsetzung werden als Katalysatoren üblicherweise Titan-Verbindungen, wie Titandioxid oder Titantetrabutylat (EP 0 343 572), Zinn-Verbindungen, wie Zinndioxid oder Dibutylzinnoxid (DE 2 523 352), oder Alkalimetallcarbonate oder -acetate (DE 1 495 299 A1 oder Vogdanis, L.; Heitz, W., Die Makromolekulare Chemie, Rapid Communications 1986, 7 (9), 543-547) verwendet.

Nachteile dieser Katalysatoren sind beispielsweise, dass in jüngster Zeit organische Zinn-Verbindungen als bedenklich für die Gesundheit des Menschen erkannt wurden. Somit ist ein Verbleib solcher Katalysatoren im Polyethercarbonatpolyol unerwünscht.

Als alternative Katalysatoren sind unter anderem die bereits erwähnten Alkalimetallcarbonate oder - acetate, aber auch Natriumdihydrogenphosphat bekannt (Pawlowski, P.; Rokicki, G. Synthesis of oligocarbonate diols from ethylene carbonate and aliphatic diols catalyzed by alkali metal salts. Polymer 2004, 45, 3125-3137). Der Nachteil von Natriumdihydrogenphosphat als Katalysator für die Anlagerung von cyclischen Carbonaten an H-funktionellen Startersubstanzen ist jedoch der geringere Umsatz im Vergleich zu beispielsweise Alkalimetallcarbonaten.

Aus WO2015/014732 ist bekannt, dass die Zugabe von Verbindungen enthaltend eine Phosphor-Sauerstoff-Bindung zu Polyethercarbonatpolyolen die Bildung von Nebenprodukten bei der thermischen Lagerung von Polyethercarbonatpolyolen reduziert. Es wäre somit wünschenswert einen Katalysator enthaltend eine Phosphor-Sauerstoff-Bindung einsetzen zu können, der im Produkt verbleiben kann.

Die der vorliegenden Erfindung zu Grunde liegende Aufgabe bestand deshalb darin, ein Verfahren zur Herstellung von Polyethercarbonatpolyolen mit einem Katalysator enthaltend eine Phosphor-Sauerstoff-Bindung bereitzustellen, welches zu einem hohen Umsatz der cyclischen Carbonate und zu einem hohen Anteil an eingebauten $CO_2$-Gruppen führt.

Überraschend wurde gefunden, dass die technische Aufgabe gelöst wird durch ein Verfahren zur Herstellung von Polyethercarbonatpolyolen durch Anlagerung cyclischen Carbonats an eine H-funktionelle Startersubstanz in Anwesenheit eines Katalysators, dadurch gekennzeichnet, dass als Katalysator ein tribasisches Alkali- oder Erdalkalimetallphosphat eingesetzt wird.

Bei dem Verfahren kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-funktioneller Startersubstanz suspendiert und anschließend die Suspension in den Reaktor gefüllt werden.
Der Katalysator wird vorzugsweise in einer Menge eingesetzt, so dass der Gehalt an Katalysator im resultierenden Reaktionsprodukt 10 bis 50000 ppm, besonders bevorzugt 250 bis 30000 ppm und höchst bevorzugt 1000 bis 25000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 30°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Carbonats bei einer Temperatur von 30°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form oder als Suspension im cyclischen Carbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann beispielsweise bei einer Temperatur von 110°C bis 220°C, bevorzugt 130°C bis 200°C, besonders bevorzugt 140°C bis 180°C erhitzt, wobei gegebenenfalls ein Inertgas-Strom (beispielsweise von Argon oder Stickstoff) durch den Reaktor geleitet wird. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt, besonders bevorzugt wird nur cyclisches Ethylencarbonat eingesetzt.

Die Polyethercarbonatpolyole können in einem batch, semi-batch oder kontinuierlichen Verfahren hergestellt werden. Bevorzugt werden die Polyethercarbonatpolyole in einem kontinuierlichen Verfahren hergestellt, das sowohl eine kontinuierliche Copolymerisation als auch eine kontinuierliche Zugabe der H-funktionellen Startersubstanz umfasst.

Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert bzw. gelöst und kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch die durch inkrementelle Zugaben bewirkte Diskontinuitäten geglättet werden.

H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH (Wasser, Alkohole), $-NH_2$ (primäre Amine), -NH- (sekundäre Amine), -SH und $-CO_2H$, bevorzugt sind -OH - $NH_2$ und $-CO_2H$ besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten und Wasser, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

## Katalysator

Erfindungsgemäß wird als Katalysator ein tribasisches Alkali- oder Erdalkalimetallphosphat eingesetzt. Bevorzugt sind die Alkalimetalle des Katalysators ausgewählt aus Natrium, Kalium oder Cäsium, besonders bevorzugt aus Natrium und Kalium. Die Erdalkalimetalle des Katalysators sind bevorzugt ausgewählt aus Calcium oder Magnesium.

Insbesondere bevorzugt handelt es sich bei dem Katalysator um ein tribasisches Alkalimetallphosphat.

Die nach dem erfindungsgemäßen Verfahren erhaltenen Polyethercarbonatpolyole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

In einer ersten Ausführungsform betrifft die Erfindung ein Verfahren zur Herstellung von Polyethercarbonatpolyolen durch Anlagerung cyclischen Carbonat an eine H-funktionelle Startersubstanz in Anwesenheit eines Katalysators, dadurch gekennzeichnet, dass

als Katalysator ein tribasisches Alkali- oder Erdalkalimetallphosphat eingesetzt wird.

In einer zweiten Ausführungsform betrifft die Erfindung ein Verfahren gemäß der ersten Ausführungsform, dadurch gekennzeichnet, dass das Alkalimetall ausgewählt ist aus Natrium, Kalium oder Cäsium ist.

In einer dritten Ausführungsform betrifft die Erfindung ein Verfahren gemäß der ersten oder zweiten Ausführungsform, dadurch gekennzeichnet, dass das Erdalkalimetall ausgewählt ist aus Calcium oder Magnesium.

In einer vierten Ausführungsform betrifft die Erfindung ein Verfahren gemäß der ersten Ausführungsform, dadurch gekennzeichnet, dass der Katalysator Natriumphosphat oder Kaliumphosphat ist.

In einer fünften Ausführungsform betrifft die Erfindung ein Verfahren gemäß einer der Ausführungsformen 1 bis 4, dadurch gekennzeichnet, dass als cyclisches Carbonat cyclisches Propylencarbonat, cyclisches Ethylencarbonat oder eine Mischung aus beiden eingesetzt wird.

In einer sechsten Ausführungsform betrifft die Erfindung ein Verfahren gemäß einem einer der Ausführungsformen 1 bis 5, dadurch gekennzeichnet, dass die Anlagerung des cyclischen Carbonats an eine H-funktionelle Startersubstanz bei einer Temperatur von 110°C bis 220°C, bevorzugt 130°C bis 200°C, besonders bevorzugt 140°C bis 180°C durchgeführt wird.

In einer siebten Ausführungsform betrifft die Erfindung ein Verfahren gemäß einer der Ausführungsformen 1 bis 6, dadurch gekennzeichnet, dass die H-funktionelle Startersubstanz ein zahlenmittleres Molekulargewicht bis 10.000 g/mol, bevorzugt bis 5.000 g/mol, besonders bevorzugt bis 2.500 g/mol aufweist.

In einer achten Ausführungsform betrifft die Erfindung ein Verfahren gemäß einer der Ausführungsformen 1 bis 7, dadurch gekennzeichnet, dass die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

In einer neunten Ausführungsform betrifft die Erfindung ein Verfahren gemäß einer der Ausführungsformen 1 bis 8, dadurch gekennzeichnet, dass der Katalysator in einem Anteil von 10 bis 50000 ppm, besonders bevorzugt 250 bis 30000 ppm und höchst bevorzugt 1000 bis 25000 ppm vorliegt.

In einer zehnten Ausführungsform betrifft die Erfindung ein Verfahren gemäß einer der Ausführungsformen 1 bis 9, dadurch gekennzeichnet, dass das Verfahren unter Stickstoff- oder Argonatmosphäre durchgeführt wird.

In einer elften Ausführungsform betrifft die Erfindung ein Verfahren gemäß einer der Ausführungsformen 1 bis 10, dadurch gekennzeichnet, dass H-funktionelle Startersubstanz, cyclisches Carbonat und Katalysator kontinuierlich in den Reaktor zudosiert wird.

In einer zwölften Ausführungsform betrifft die Erfindung ein Verfahren gemäß der elften Ausführungsform, dadurch gekennzeichnet, dass das resultierende Produkt kontinuierlich aus dem Reaktor abgeführt wird.

In einer dreizehnten Ausführungsform betrifft die Erfindung ein Polyethercarbonatpolyol erhalten durch ein Verfahren gemäß einer der Ausführungsformen 1 bis 12.

In einer vierzehnten Ausführungsform betrifft die Erfindung die Verwendung des Polyethercarbonatpolyols gemäß der dreizehnten Ausführungsform in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten, oder in der Herstellung von Polyurethanen, z.B. Polyurethan-Weichschaumstoffen.


**Experimenteller Teil**

Experimentell ermittelte OH-Zahlen wurden gemäß der Vorschrift DIN 53240-2 (November 2007) bestimmt.

Der Anteil an eingebautem $CO_2$ im resultierenden Polyetherpolycarbonatpolyol ($CO_2$-Gehalt) wurden mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt:

Für verbleibendes monomeres Ethylencarbonat (Signal bei 4,53 ppm) Resultierend aus im Polyetherpolycarbonatpolyol eingebautem Kohlendioxid (Resonanzen bei 4,37-3,21 und ggf. 4,19-4,07 ppm - abhängig vom gewählten Startermolekül), Polyetherpolyol (d.h. ohne eingebautem Kohlendioxid) mit Resonanzen bei 3,80-3,55 ppm.

Der Molenanteil des im Polymer eingebauten Carbonats in der Reaktionsmischung wird nach Formel (I) wie folgt berechnet, wobei folgende Abkürzungen verwendet werden:

| | |
|---|---|
| F(4,53) | = Fläche der Resonanz bei 4,53 ppm für cyclisches Carbonat (entspricht vier Protonen) |
| F(4,37-4,21) | = Fläche der Resonanz bei 4,37-4,21 ppm für Polyetherpolycarbonatpolyol. |
| F(4,19-4,07) | = Fläche der Resonanz bei 4,19-4,07 ppm for Polyetherpolycarbonatpolyol (Die Summe von F (4,37-4,21) und F(4,19-4,07) entspricht 4 Protonen) |
| F(3,8-3,55) | = Fläche der Resonanz bei 3,8-3,55 ppm für Polyetherpolyol (entspricht 4 Protonen) |

Unter Berücksichtigung der relativen Intensitäten wurde gemäß der folgenden Formel (I) für das polymer gebundene Carbonat ("lineares Carbonat" LC) in der Reaktionsmischung in Gew.-% berechnet:

$$LC_{gew.\%} = \frac{[F(4,37\text{-}4,21)+F(4,19\text{-}4,07)]\cdot 88}{N} \cdot 100\ \% \qquad (I)$$

wobei sich der Wert für $N$ ("Nenner" $N$) nach Formel (III) berechnet:

$$N = [(4,37\text{-}4,21) + F(4,19\text{-}4,07)] \cdot 88 + F(3,8 - 3,55) \cdot 44 \qquad (II)$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid.

Der Gewichtsanteil (in Gew.-%) an $CO_2$ im Polyetherpolycarbonatpolyol wurde nach Formel (III) berechnet:

$$CO_{2\,gew.\%} = LC_{gew.\%} \cdot \frac{44}{88} \qquad (III)$$

Um aus den Werten der Zusammensetzung der Reaktionsmischung die Zusammensetzung bezogen auf den Polymer-Anteil (bestehend aus Polyetherpolycarbonatpolyol, aufgebaut aus Starter, cyclischem Ethylencarbonat), wurden die Nicht-Polymer-Bestandteile der Reaktionsmischung (d.h. nicht umgesetztes cyclisches Ethylencarbonat) rechnerisch eliminiert. Der Gewichtsanteil der Carbonat-Wiederholungseinheiten im Polyetherpolycarbonatpolyol wurde in einen Gewichtsanteil Kohlendioxid mittels des Faktors F=44/(44+44) umgerechnet (Siehe Formel III). Die Angabe des $CO_2$-Gehalts im Polyetherpolycarbonatpolyol ("eingebautes $CO_2$"; siehe nachfolgende Beispiele) ist normiert auf das Polyetherpolycarbonatpolyol-Molekül, das bei der ringöffnenden Polymerisation entstanden ist.

Der Umsatz der Reaktionslösung wird nach Formel (IV) wie folgt berechnet, wobei folgende Abkürzungen verwendet werden (exemplarisch dargestellt für 1,6-Hexandiol als H-funktionelle Startersubstanz, für alternative Starter wurde die Berechnung entsprechend angepasst):

| | |
|---|---|
| F(1.78 - 1.29) | = Normierte Fläche der Resonanz bei 1.78 - 1.29 ppm für 1,6-Hexandiol (definiert als 8 Protonen) |
| F(4.36 - 3.20) | = Normierte Fläche der Resonanz bei 4.36 - 3.20 ppm für |

Polyetherpolycarbonatpolyol und 1,6-Hexandiol (verbleibende 4 Protonen).

Aus dem Verhältnis von H-funktioneller Startersubstanz (z.B. 1,6-Hexandiol: 12 H) zu Monomer ergibt sich, dass 31,57 Protonen aus cEC im Reaktionsgemisch vorliegen (Stoffmengenverhältnis von $n$(cEC)/$n$(1,6-HD) = 7.89).

Unter Berücksichtigung der relativen Intensitäten wurde gemäß der folgenden Formel (IV) der Umsatz berechnet:

$$Umsatz_{mol\%} = \frac{F_{(4.36-3.20)} - \frac{F_{(1.78-1.29)}}{2}}{31,57} \cdot 100\ \% \qquad (IV)$$

Eingesetzte Rohstoffe:

Alle aufgezählten Chemikalien wurden vom genannten Hersteller in der angegebenen Reinheit erworben und ohne weitere Behandlung für die Synthese von Polyethercarbonatpolyolen verwendet.

| | |
|---|---|
| Kaliumphopshat; $K_3PO_4$ | Sigma-Aldrich 97 % |
| Cyclisches Ethylencarbonat (cEC): | Sigma-Aldrich 99 % |
| 1,6-Hexandiol: | Sigma-Aldrich 99 % |
| Glycerin: | Sigma-Aldrich 99%, anhydrous |
| Natriumdihydrogenphosphat | Sigma-Aldrich >99 % |
| Dinatriumhydrogenphosphat | Sigma-Aldrich>99 % |
| Natriumphosphat | Sigma-Aldrich >98 |
| Lithiumphosphat | Sigma-Aldrich 98 |
| Natriumpyrophosphat | Sigma-Aldrich >95 |
| 1-Dodecanol | Sigma-Aldrich 98 % |
| 1-Hexadecanol | Sigma-Aldrich $\geq$99 % |

**Beispiel 1: Darstellung von Polyethercarbonatpolyolen durch ringöffnende Polymerisation von cyclischem Ethylencarbonat in Gegenwart von 1,6-Hexandiol als Starter und $K_3PO_4$ als Katalysator**

Ein 500 mL Vierhalsglaskolben wurde mit Rückflusskühler, KPG-Rührer, Thermofühler, Stickstoffzuleitung und Gasaustritt/Gasabfuhr mit Überdruckventil ausgestattet. Anschließend wurden 200 g cyclisches Ethylencarbonat, 34,25 g 1,6-Hexandiol und 2,41 g $K_3PO_4$ eingewogen. Für 30 Minuten wurde 10 L/h Stickstoff eingeleitet wobei die Suspension dabei mit 300 U/min gerührt wurde. Im Anschluss wurde die Suspension stufenweise auf 180°C aufgeheizt. Der entstehende Gasstrom wurde nach dem Rückflusskühler durch einen Blasenzähler abgelassen.

Die Reaktionsmischung wurde so lange bei der eingestellten Temperatur gehalten, bis die Gasentwicklung zum Erliegen kommt. Die Vollständigkeit der Reaktion wurde durch das vollständige Verschwinden der zwei cEC C=O Banden bei 1850-1750 cm$^{-1}$ mittels IR-Spektroskopie überprüft. Der im Polyetherpolycarbonatpolyol eingebaute $CO_2$-Anteil wurde nach den zuvor beschriebenen Methoden mittels $^1$H-NMR Spektroskopie ermittelt.

Die Eigenschaften des resultierenden Polyethercarbonatpolyols sind in Tabelle 1 dargestellt.

**Beispiel 2: Darstellung von Polyethercarbonatpolyolen durch ringöffnende Polymerisation von cyclischem Ethylencarbonat in Gegenwart von 1,6-Hexandiol als Starter und $Na_3PO_4$ als Katalysator**

Die Reaktion wurde analog zu Beispiel 1 durchgeführt, wobei $Na_3PO_4$ (1,86 g) anstelle von $K_3PO_4$ als Katalysator eingesetzt wurde.

Die Eigenschaften des resultierenden Polyethercarbonatpolyols sind in Tabelle 1 dargestellt.

**Beispiel 3: Darstellung von Polyethercarbonatpolyolen durch ringöffnende Polymerisation von cyclischem Ethylencarbonat in Gegenwart von $H_2O$ als Starter und $K_3PO_4$ als Katalysator**

Die Reaktion wurde analog zu Beispiel 1 durchgeführt, wobei $H_2O$ (3,9 g) anstelle von 1,6-Hexandiol als Starter eingesetzt wurde.

Die Eigenschaften des resultierenden Polyethercarbonatpolyols sind in Tabelle 1 dargestellt.

**Beispiel 4: Darstellung von Polyethercarbonatpolyolen durch ringöffnende Polymerisation von cyclischem Ethylencarbonat in Gegenwart von 1-Dodecanol als Starter und $K_3PO_4$ als Katalysator**

Die Reaktion wurde analog zu Beispiel 1 durchgeführt, wobei 1-Dodecanol (30,2 g) anstelle von 1,6-Hexandiol als Starter eingesetzt und die Menge an cEC auf 100 g cEC halbiert wurde.

Die Eigenschaften des resultierenden Polyethercarbonatpolyols sind in Tabelle 1 dargestellt.

**Beispiel 5: Darstellung von Polyethercarbonatpolyolen durch ringöffnende Polymerisation von cyclischem Ethylencarbonat in Gegenwart von 1-Hexadecanol als Starter und $K_3PO_4$ als Katalysator**

Die Reaktion wurde analog zu Beispiel 1 durchgeführt, wobei 1-Hexadecanol (39,3 g) anstelle von 1,6-Hexandiol als Starter eingesetzt und die Menge an cEC auf 100 g cEC halbiert wurde.
Die Eigenschaften des resultierenden Polyethercarbonatpolyols sind in Tabelle 1 dargestellt.

**Beispiel 6: Darstellung von Polyethercarbonatpolyolen durch ringöffnende Polymerisation von cyclischem Ethylencarbonat in Gegenwart von Glycerin als Starter und $K_3PO_4$ als Katalysator**

Die Reaktion wurde analog zu Beispiel 1 durchgeführt, wobei Glycerin (14,4 g) anstelle von 1,6-Hexandiol als Starter eingesetzt wurde.
Die Eigenschaften des resultierenden Polyethercarbonatpolyols sind in Tabelle 1 dargestellt.

**Beispiel 7: Darstellung von Polyethercarbonatpolyolen durch ringöffnende Polymerisation von cyclischem Ethylencarbonat in Gegenwart von 1,6-Hexandiol als Starter und $NaH_2PO_4$ als Katalysator**

Die Reaktion wurde analog zu Beispiel 1 durchgeführt, wobei $NaH_2PO_4$ (1,36 g) anstelle von $K_3PO_4$ als Katalysator eingesetzt wurde.
Die Eigenschaften des resultierenden Polyethercarbonatpolyols sind in Tabelle 1 dargestellt.

**Beispiel 8: Darstellung von Polyethercarbonatpolyolen durch ringöffnende Polymerisation von cyclischem Ethylencarbonat in Gegenwart von 1,6-Hexandiol als Starter und $Na_2HPO_4$ als Katalysator**

Die Reaktion wurde analog zu Beispiel 1 durchgeführt, wobei $Na_2HPO_4$ (1,61 g) anstelle von $K_3PO_4$ als Katalysator eingesetzt wurde.
Die Eigenschaften des resultierenden Polyethercarbonatpolyols sind in Tabelle 1 dargestellt.

**Beispiel 9: Darstellung von Polyethercarbonatpolyolen durch ringöffnende Polymerisation von cyclischem Ethylencarbonat in Gegenwart von 1,6-Hexandiol als Starter und $H_3PO_4$ als Katalysator**

Die Reaktion wurde analog zu Beispiel 1 durchgeführt, wobei $H_3PO_4$ (1,11g) anstelle von $K_3PO_4$ als Katalysator eingesetzt wurde.
Die Eigenschaften des resultierenden Polyethercarbonatpolyols sind in Tabelle 1 dargestellt.

**Beispiel 10: Darstellung von Polyethercarbonatpolyolen durch ringöffnende Polymerisation von cyclischem Ethylencarbonat in Gegenwart von 1,6-Hexandiol als Starter und $Na_4P_2O_7$ als Katalysator**

Die Reaktion wurde analog zu Beispiel 1 durchgeführt, wobei $Na_4P_2O_7$ (3,02 g) anstelle von $K_3PO_4$ als Katalysator eingesetzt wurde.
Die Eigenschaften des resultierenden Polyethercarbonatpolyols sind in Tabelle 1 dargestellt.

**Beispiel 11: Darstellung von Polyethercarbonatpolyolen durch ringöffnende Polymerisation von cyclischem Propylencarbonat in Gegenwart von 1,6-Hexandiol als Starter und $Na_3PO_4$ als Katalysator**

Ein 500 mL Vierhalsglaskolben wurde mit Rückflusskühler, KPG-Rührer, Thermofühler, Stickstoffzuleitung und Gasaustritt/Gasabfuhr mit Überdruckventil ausgestattet. Anschließend wurden 200 g cyclisches Propylencarbonat, 34,25 g 1,6-Hexandiol und 2,08 g $K_3PO_4$ eingewogen. Für 30 Minuten wurde 10 L/h Stickstoff eingeleitet wobei die Suspension dabei mit 300 U/min gerührt wurde. Im Anschluss wurde die Suspension stufenweise auf 180°C aufgeheizt. Der entstehende Gasstrom wurde nach dem Rückflusskühler durch einen Blasenzähler abgelassen.
Die Reaktionsmischung wurde so lange bei der eingestellten Temperatur gehalten, bis die Gasentwicklung zum Erliegen kommt. Der Fortschritt der Reaktion wurde mittels IR-Spektroskopie (cPC C=O Bande bei 1790 cm[-1]) bestimmt.
Der im Polyetherpolycarbonatpolyol eingebaute $CO_2$-Anteil wurde mittels $^1$H-NMR Spektroskopie ermittelt.
Die Eigenschaften des resultierenden Polyethercarbonatpolyols sind in Tabelle 2 dargestellt.

**Beispiel 12: Darstellung von Polyethercarbonatpolyolen durch ringöffnende Polymerisation von cyclischem Propylencarbonat in Gegenwart von 1,6-Hexandiol als Starter und $Na_3PO_4$ als Katalysator**

Die Reaktion wurde analog zu Beispiel 11 durchgeführt, wobei $Na_3PO_4$ (1,61 g) anstelle von $K_3PO_4$ als Katalysator und eine Reaktionstemperatur von 200 °C eingesetzt wurde.

Die Eigenschaften des resultierenden Polyethercarbonatpolyols sind in Tabelle 2 dargestellt.

**Beispiel 13: Darstellung von Polyethercarbonatpolyolen durch ringöffnende Polymerisation von cyclischem Propylencarbonat in Gegenwart von $H_2O$ als Starter und $K_3PO_4$ als Katalysator**

Die Reaktion wurde analog zu Beispiel 11 durchgeführt, wobei $H_2O$ (4,28 g) anstelle von 1,6-Hexandiol als Starter eingesetzt wurde.

Die Eigenschaften des resultierenden Polyethercarbonatpolyols sind in Tabelle 2 dargestellt.

**Beispiel 14: Darstellung von Polyethercarbonatpolyolen durch ringöffnende Polymerisation von cyclischem Propylencarbonat in Gegenwart von 1,6-Hexandiol als Starter und $Na_2HPO_4$ als Katalysator**

Die Reaktion wurde analog zu Beispiel 11 durchgeführt, wobei $Na_2HPO_4$ (1,39 g) anstelle von $K_3PO_4$ als Katalysator und eine Reaktionstemperatur von 220°C eingesetzt wurde.

**Tabelle 1:**

| Beispiel | cycl. Carbonat | Katalysator | Starter | $CO_2$ [Gew.%] | Umsatz (cEC) [%] |
|---|---|---|---|---|---|
| 1 | cEC | $K_3PO_4$ | 1,6-Hexandiol | 15 | 99 |
| 2 | cEC | $Na_3PO_4$ | 1,6-Hexandiol | 13 | 81 |
| 3 | cEC | $K_3PO_4$ | $H_2O$ | 10 | 99 |
| 4 | cEC | $K_3PO_4$ | 1-Dodecanol | 15 | 99 |
| 5 | cEC | $K_3PO_4$ | 1-Hexadecanol | 16 | 99 |
| 6 | cEC | $K_3PO_4$ | Glycerin | 8 | 99 |
| 7* | cEC | $NaH_2PO_4$ | 1,6-Hexandiol | 21 | 29 |
| 8* | cEC | $Na_2HPO_4$ | 1,6-Hexandiol | 21 | 16 |
| 9* | cEC | $H_3PO_4$ | 1,6-Hexandiol | 17 | 8 |
| 10* | cEC | $Na_4P_2O_7$ | 1,6-Hexandiol | 19 | 37 |
| * Vergleichsbeispiel | | | | | |

In Tabelle 1 sind die Eigenschaften der Polyethercarbonatpolyole angegeben, die durch Anlagerung von cyclischem Ethylencarbonat an einer H-funktionellen Startersubstanz hergestellt wurden. Es ist zu erkennen, dass der Einsatz der erfindungsgemäßen Katalysatoren zu einem Einbau von $CO_2$-Gruppen mit einem hohen Umsatz an cyclischem Ethylencarbonat führt. Die erfindungsgemäßen Beispiele 1 bis 6 weisen alle Umsätze von mehr als 80% cyclischen Ethylencarbonats auf, wobei die Beispiele 7 bis 10 ohne einen erfindungsgemäßen Katalysator einen Umsatz von weniger als 30% cyclischen Ethylencarbonats auf weisen.

**Tabelle 2:**

| Beispiel | cycl. Carbonat | Katalysator | Starter | $CO_2$ [Gew.%] | Umsatz (cPC) [%] |
|---|---|---|---|---|---|
| 11 | cPC | $K_3PO_4$ | 1,6-Hexandiol | 7 | 99 |
| 12 | cPC | $Na_3PO_4$ | 1,6-Hexandiol | 6 | 75 |
| 13 | cPC | $K_3PO_4$ | $H_2O$ | 4 | 99 |
| 14* | cPC | $Na_2HPO_4$ | Hexandiol | 9 | 25 |
| * Vergleichsbeispiel | | | | | |

In Tabelle 2 sind die Eigenschaften für die Polyethercarbonatpolyole dargestellt, welche mittels Anlagerung von cyclischem Propylencarbonat an eine H-funktionelle Startersubstanz hergestellt wurden. Hierbei ist ebenfalls zu erkennen, dass die Verwendung der erfindungsgemäßen Katalysatoren (Beispiele 11 bis 13) im Vergleich zu einem nicht-erfindungsgemäßen Katalysator (Beispiel 14) zu einem hohen Umsatz an cyclischen Propylencarbonat führt.

**Patentansprüche**

1. Verfahren zur Herstellung von Polyethercarbonatpolyolen durch Anlagerung cyclischen Carbonat an eine H-funktionelle Startersubstanz in Anwesenheit eines Katalysators, **dadurch gekennzeichnet, dass** als Katalysator ein tribasisches Alkali- oder Erdalkalimetallphosphat eingesetzt wird.

2. Verfahren gemäß Anspruch 1, **dadurch gekennzeichnet, dass** das Alkalimetall ausgewählt ist aus Natrium, Kalium oder Cäsium ist.

3. Verfahren gemäß Anspruch 1 oder 2, **dadurch gekennzeichnet, dass** das Erdalkalimetall ausgewählt ist aus Calcium oder Magnesium.

4. Verfahren gemäß Anspruch 1, **dadurch gekennzeichnet, dass** der Katalysator Natriumphosphat oder Kaliumphosphat ist.

5. Verfahren gemäß einem der Ansprüche 1 bis 4, **dadurch gekennzeichnet, dass** als cyclisches Carbonat cyclisches Propylencarbonat, cyclisches Ethylencarbonat oder eine Mischung aus beiden eingesetzt wird.

6. Verfahren gemäß einem der Ansprüche 1 bis 5, **dadurch gekennzeichnet, dass** die Anlagerung des cyclischen Carbonats an eine H-funktionelle Startersubstanz bei einer Temperatur von 110°C bis 220°C, bevorzugt 130°C bis 200°C, besonders bevorzugt 140°C bis 180°C durchgeführt wird.

7. Verfahren gemäß einem der Ansprüche 1 bis 6, **dadurch gekennzeichnet, dass** die H-funktionelle Startersubstanz ein zahlenmittleres Molekulargewicht bis 10.000 g/mol, bevorzugt bis 5.000 g/mol, besonders bevorzugt bis 2.500 g/mol aufweist.

8. Verfahren gemäß einem der Ansprüche 1 bis 7, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

9. Verfahren gemäß einem der Ansprüche 1 bis 8, **dadurch gekennzeichnet, dass** der Katalysator in einem Anteil von 10 bis 50000 ppm, besonders bevorzugt 250 bis 30000 ppm und höchst bevorzugt 1000 bis 25000 ppm vorliegt.

10. Verfahren gemäß einem der Ansprüche 1 bis 9, **dadurch gekennzeichnet, dass** das Verfahren unter Stickstoff- oder Argonatmosphäre durchgeführt wird.

11. Verfahren gemäß einem der Ansprüche 1 bis 10, **dadurch gekennzeichnet, dass** H-funktionelle Startersubstanz, cyclisches Carbonat und Katalysator kontinuierlich in den Reaktor zudosiert wird.

12. Verfahren gemäß Anspruch 11, **dadurch gekennzeichnet, dass** das resultierende Produkt kontinuierlich aus dem Reaktor abgeführt wird.

13. Polyethercarbonatpolyol erhalten durch ein Verfahren gemäß einem der Ansprüche 1 bis 12.

14. Verwendung des Polyethercarbonatpolyols gemäß Anspruch 13 in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder in der Herstellung von Polyurethan.

**Europäisches Patentamt**
**European Patent Office**
**Office européen des brevets**

# EUROPÄISCHER RECHERCHENBERICHT

**Nummer der Anmeldung**

EP 19 19 2407

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 248 414 A (STEVENS HENRY C) 26. April 1966 (1966-04-26) * Spalte 3, Zeile 56; Beispiele 1-5 * * Spalte 5, Zeile 3 * * Spalte 1, Zeile 29 - Zeile 37 * ----- | 1-14 | INV. C08G64/30 C08G18/42 C08G65/26 |
| A,D | PAWLOWSKI P ET AL: "Synthesis of oligocarbonate diols from ethylene carbonate and aliphatic diols catalyzed by alkali metal salts", POLYMER, ELSEVIER SCIENCE PUBLISHERS B.V, GB, Bd. 45, Nr. 10, 1. Mai 2004 (2004-05-01), Seiten 3125-3137, XP004502940, ISSN: 0032-3861, DOI: 10.1016/J.POLYMER.2004.03.047 * Beispiel 21; Tabelle 1 * ----- | 1-14 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| Den Haag | 18. September 2019 | Hoffmann, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 2407

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2019

| Im Recherchenbericht angeführtes Patentdokument | Datum der Veröffentlichung | Mitglied(er) der Patentfamilie | Datum der Veröffentlichung |
|---|---|---|---|
| US 3248414 A | 26-04-1966 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0343572 A
- DE 2523352
- DE 1495299 A1
- WO 2015014732 A
- EP 1359177 A

**In der Beschreibung aufgeführte Nicht-Patentliteratur**

- **VOGDANIS, L. ; HEITZ, W.** *Die Makromolekulare Chemie, Rapid Communications,* 1986, vol. 7 (9), 543-547
- **PAWLOWSKI, P. ; ROKICKI, G.** Synthesis of oligo-carbonate diols from ethylene carbonate and aliphatic diols catalyzed by alkali metal salts. *Polymer,* 2004, vol. 45, 3125-3137